# DEMANDE DE BREVET EUROPEEN

(11) **EP 4 354 657 A1**
(43) Date de publication de la demande: **17.04.2024**
(21) Numéro de dépôt: 23203603.8
(22) Date de dépôt: 13.10.2023
(51) Int. Cl.: H01Q 3/24, H01Q 19/19, H01Q 25/00

(54) **FORMATEUR DE FAISCEAUX QUASI-OPTIQUE COMPRENANT DEUX RÉFLECTEURS**

(30) Priorité: 13.10.2022 FR 2210515
(71) Demandeur: THALES, 92190 Meudon (FR); Centre National d'Etudes Spatiales, 75001 Paris (FR); Centre National de la Recherche Scientifique, 75016 Paris (FR); Université de Rennes, 35700 Rennes (FR); Nantes Université, 44000 Nantes (FR); CentraleSupélec, 91192 - Gif sur Yvette Cedex (FR); Institut National Des Sciences Appliquees de Rennes (INSA), 35708 Rennes Cedex (FR)
(72) Inventeur: FRAYSSE, Jean-Philippe, 31200 Toulouse (FR); LASSAUCE, Léonin, 88000 Epinal (FR); TUBAU, Ségolène, 31300 Toulouse (FR); ETTORRE, Mauro, 35000 Rennes (FR); LEGAY, Hervé, 31830 Plaisance du Touch (FR)
(74) Mandataire: Atout PI Laplace

(57) **Abrégé**

Formateur de faisceaux quasi-optique (1) comprenant :
- une pluralité de N > 1 sources d'alimentation (PF), chacune des i ∈ [1; N] sources d'alimentation (PF) étant adaptée pour émettre un faisceau radiofréquence respectif noté Rᵢ
- une ligne de transmission (LT) radiofréquence alimentée en une première extrémité par les sources d'alimentation et comprenant en une deuxième extrémité une pluralité de port réseaux (PR) adaptés pour collecter un rayonnement radiofréquence, la ligne de transmission (LT) comprenant un guide d'onde radiofréquence (GO) comprenant au moins deux plaques métalliques (PM) empilées pour guider les faisceaux radiofréquence Rᵢ, i ∈ [1; N] vers les ports réseaux (PR), la ligne de transmission (LT) s'étendant selon un axe principal central noté axe x,
- un premier réflecteur (M1) présentant un premier centre (C1) centré sur l'axe x et un premier rayon de courbure effectif et étant adapté pour réfléchir les faisceaux radiofréquences Rᵢ, i ∈ [1; N] guidés,
- un deuxième réflecteur (M2) présentant un deuxième rayon de courbure effectif et étant adapté pour réfléchir les faisceaux radiofréquences Rᵢ, i ∈ [1; N] réfléchis (*RFᵢ*) par le premier réflecteur en le dirigeant vers les ports réseaux de manière à former des faisceaux radiofréquence Rᵢ, i ∈ [1; N] de sortie (*RSᵢ*), le premier et le deuxième rayons de courbure effectifs et un agencement des sources d'alimentation (PF) par rapport au premier étant adaptés pour que :
- chacun des faisceaux radiofréquences Rᵢ, i ∈ [1; N] de sortie (*RSᵢ*) soit une onde plane, et
- un distribution d'amplitude transverse sur les ports réseaux (PR) Aᵢ de chaque faisceau radiofréquence Rᵢ, i ∈ [1; N] de sortie (*RSᵢ*), soit sensiblement identique.

## Description

### Domaine technique :

L'invention concerne de manière générale le domaine des télécommunications, et en particulier les formateurs de faisceaux quasi-optiques (FFQO) pour antennes actives multifaisceaux.

### Technique antérieure :

Les formateurs de faisceaux quasi-optiques peuvent être embarqués dans des satellites ou dans des stations au sol. Les antennes utilisant de tels formateurs peuvent fonctionner en émission ou en réception, de façon réciproque.

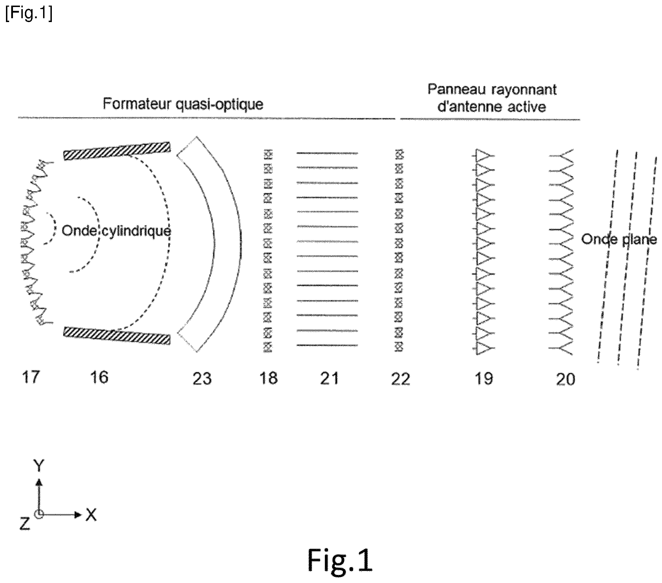

Un formateur de faisceaux quasi-optiques est un dispositif focalisant (en réception) et collimatant (en émission). La figure 1 représente un formateur de faisceaux quasi-optiques de l'état de l'art pouvant s'appliquer par exemple aux formateurs de faisceaux pillbox, à lentille à retard continue ou Rotman. Un formateur de faisceaux quasi-optiques intègre classiquement un guide à plaques parallèles 16, reliant des ports faisceaux 17 et des ports réseaux 18. Le guide d'ondes à plaques parallèles 16 permet de guider les ondes en mode TEM (acronyme pour « Transverse Electrique Magnétique »), dans lequel le champ électrique E et le champ magnétique H évoluent dans des directions perpendiculaires à la direction de propagation X.

Les fronts d'onde sont incurvés dans le plan XY. Afin de compenser la courbure du front d'onde, un dispositif quasi-optique 23 est introduit entre les ports faisceaux et les ports réseaux. Ce dispositif quasi-optique peut-être par exemple une lentille telle qu'utilisée pour les lentilles à retard continue ou un réflecteur tel qu'utilisé pour les formateurs de faisceaux pillbox. Chaque port réseau 18 est connecté à un amplificateur 19 suivi d'un élément rayonnant 20 par l'intermédiaire d'une ligne à retard 21 et d'un port amplificateur 22. Il transforme les ondes cylindriques émanant des ports faisceaux en des ondes planes rayonnées par le panneau rayonnant de l'antenne active multifaisceaux.

Les FFQO pour antennes actives sont des équipements qui s'appliquent sur des signaux bas niveaux. Une amplification est intégrée entre le FFQO et les éléments rayonnants. Des pertes modérées sont alors acceptables.

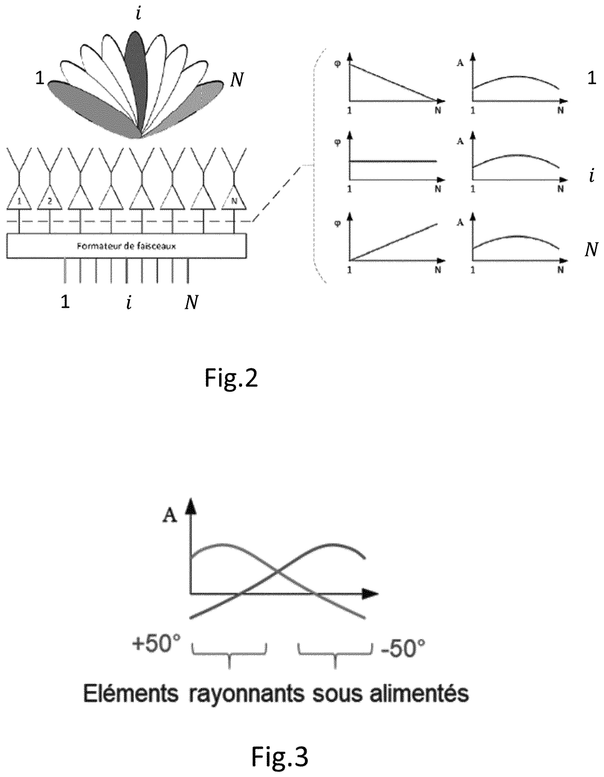

Les formateurs de faisceaux ont pour but de générer les lois de phase et d'amplitude requises pour former les faisceaux dans les directions souhaitées avec de faibles niveaux de lobes secondaires. La Figure 2 montre ainsi des exemples de ces lois pour trois faisceaux numérotés 1, *i* et *N*. Elle met en évidence les variations des lois de phase désirées pour diriger les faisceaux dans les directions souhaitées. Elle met également en avant une loi d'amplitude apodisée afin d'obtenir des niveaux bas de lobes secondaires sur les diagrammes de rayonnement. Il est à noter que sur ces trois exemples, la loi d'amplitude est stable et centrée au centre de la lentille et tous les amplificateurs sont alimentés afin de bénéficier d'une bonne efficacité de rayonnement. Ces caractéristiques doivent être respectées lors de la conception d'une antenne active pour ne pas être contraint de sur-dimensionner l'antenne.

En effet dans le cas d'une dépendance de la loi d'amplitude à la direction de pointage telle que décrite sur la Figure 3, le panneau rayonnant de l'antenne doit être surdimensionné afin de pouvoir suivre le déplacement de la loi d'amplitude avec la direction de pointage. Il en résulte que pour chaque direction de pointage, une partie du réseau d'amplificateurs rayonnants n'est pas illuminée, entrainant ainsi une dégradation de l'efficacité de l'antenne.

Les formateurs de faisceaux quasi-optiques connus fonctionnant sur un large secteur angulaire n'ont malheureusement pas une loi d'amplitude stable. L'utilisation sur un large secteur angulaire est nécessaire dans de nombreuses applications (notamment pour des applications satellites). Leurs utilisations dans des formateurs de faisceaux pour antennes actives conduisent ainsi à de faibles efficacités de rayonnement d'antenne et à des surcouts dus à l'implémentation de circuits front-ends supplémentaires. Ce sont des inconvénients majeurs pour leurs utilisations dans des antennes actives.

Actuellement aucun des FFQO connus ne permet de couvrir un secteur angulaire supérieur à +-50° avec une loi d'amplitude en sortie du dispositif optique stable sur le secteur angulaire couvert.

L'invention vise à pallier certains problèmes de l'art antérieur. A cet effet, un objet de l'invention est un formateur de faisceaux quasi-optiques comprenant une pluralité de sources d'alimentation, chacune adaptée pour émettre un faisceau radiofréquence guidés dans un guide d'onde radiofréquence et comprenant deux réflecteurs couplés au guide d'onde. Les réflecteurs sont adaptés pour former des faisceaux radiofréquences de sortie sous la forme d'une onde plane et pour obtenir une distribution d'amplitude transverse sensiblement identique en sortie du formateur de faisceaux quasi-optiques. L'utilisation de deux réflecteurs particulièrement adaptés permet une grande compacité du formateur de faisceaux tout en assurant un fonctionnement optimisé sur une large plage angulaire. En outre, le formateur de faisceaux permet de facilement contrôler la dimension de la zone de sortie où sont situés les ports réseaux adaptés pour collecter un rayonnement radiofréquence. Ces caractéristiques rendent le formateur de faisceaux de l'invention particulièrement adapté pour être combiné avec un panneau rayonnant pour former une antenne active planaire.

### Résumé de l'invention :

A cet effet, un objet de l'invention est un formateur de faisceaux quasi-optique comprenant :
- une pluralité de N > 1 sources d'alimentation, chacune des i ∈ [1; N] sources d'alimentation étant adaptée pour émettre un faisceau radiofréquence respectif noté Rᵢ
- un guide d'onde radiofréquence à plaques parallèles s'étendant selon un axe principal central noté axe x et étant alimenté en une première extrémité par les sources d'alimentation, une pluralité de port réseaux étant agencés en une deuxième extrémité du guide d'onde radiofréquence pour collecter un rayonnement radiofréquence, le guide d'onde radiofréquence comprenant au moins deux plaques métalliques empilées pour guider les faisceaux radiofréquence Rᵢ, i ∈ [1; N] vers les ports réseaux,
- un système quasi-optique présentant un plan focal et comprenant un premier réflecteur présentant un premier centre centré sur l'axe x et un premier rayon de courbure effectif et étant adapté pour réfléchir les faisceaux radiofréquences Rᵢ, i ∈ [1; N] guidés, et comprenant un deuxième réflecteur présentant un deuxième rayon de courbure effectif et étant adapté pour réfléchir les faisceaux radiofréquences réfléchis par le premier réflecteur en le dirigeant vers les ports réseaux de manière à former des faisceaux radiofréquence de sortie
le premier et le deuxième rayons de courbure effectifs et un agencement des sources d'alimentation étant adaptés pour que chacun des faisceaux radiofréquences de sortie soit une onde plane, et pour qu'une distribution d'amplitude transverse Aᵢ sur les ports réseaux de chaque faisceau radiofréquence de sortie, soit sensiblement identique.

Selon un mode de réalisation de l'invention, une distance entre un centre focal de chaque source d'alimentation et le premier centre est inférieure à une dimension utile du premier réflecteur divisée par deux.

Selon un mode de réalisation de l'invention, une direction de propagation des faisceaux radiofréquences Rᵢ, i ∈ [1; N] et le premier et le deuxième rayons de courbure effectifs sont configurés pour qu'au moins un des faisceaux radiofréquence de sortie se propage avec un angle supérieur à 45°, préférentiellement 55° par rapport à l'axe x.

Selon un mode de réalisation de l'invention, les sources d'alimentation sont agencées de sorte à ce que chacun des faisceaux radiofréquences Rᵢ, i ∈ [1; N] illumine partiellement le premier et le second réflecteurs sur une zone différente de celle des autres faisceaux radiofréquences.

Selon un mode de réalisation de l'invention, une dimension transverse d'une zone formée par l'ensemble des ports réseaux, appelée zone de prélèvement, est inférieure à une dimension maximale du premier et du deuxième réflecteur.

Selon un mode de réalisation de l'invention, les sources d'alimentation sont superposées sur au moins deux étages, chacun des au moins deux étages étant séparés par un plan conducteur commun à deux étages adjacents, le formateur de faisceaux quasi-optique comprenant un film résistif disposé dans la continuité du plan conducteur.

Selon un mode de réalisation de l'invention, un centre focal de chaque source d'alimentation est agencé dans le plan focal du système quasi-optique.

Selon un mode de réalisation de l'invention préféré, le formateur de faisceaux de l'invention est réalisé à partir d'un circuit imprimé multicouches. De manière préférentielle, le circuit imprimé multicouches comprend au moins trois couches empilées, les trois couches empilées étant métallisées ou partiellement métallisées de manière former le guide d'onde radiofréquence, le guide d'onde comprenant une première, une deuxième et une troisième portions empilées, le premier réflecteur étant disposé de manière à réfléchir les faisceaux radiofréquences Rᵢ, i ∈ [1; N] guidés dans la première portion vers la deuxième portion et le deuxième réflecteur étant disposé de manière à réfléchir les faisceaux radiofréquences Rᵢ, i ∈ [1; N] guidés dans la deuxième portion vers la troisième portion.

De manière préférentielle, dans le mode de réalisation préféré, le premier et le deuxième réflecteurs comprennent chacun des lamelles métalliques déposées sur une face métallisée du circuit multicouches, une hauteur et un agencement des lamelles étant adaptée pour que premier et le deuxième réflecteur présente respectivement le premier et le deuxième rayon de courbure effectif. Alternativement, selon un autre mode de réalisation, les réflecteurs sont réalisés avec des transitions sans contact entre plusieurs couches du guide d'onde radiofréquence.

Selon un mode de réalisation de l'invention, le formateur de faisceaux de l'invention comprend un nombre de réflecteurs supérieur à deux, les réflecteurs étant agencés de manière à réfléchir successivement les faisceaux radiofréquence Rᵢ, i ∈ [1; N] et les collimater.

Un autre objet de l'invention est une antenne active plane comprenant :
- au moins un formateur de faisceaux selon l'invention
- des lignes à retard, chacune connectée à un des ports réseaux respectif en une extrémité proximale et en un dispositif amplificateur de puissance en une extrémité distale, le dispositif amplificateur de puissance étant adapté pour amplifier un signal radiofréquence collecté par le port faisceau respectif
- des éléments rayonnants chacun relié à un dispositif amplificateur de puissance respectif et adapté pour émettre une onde radiofréquence à partir du signal radiofréquence amplifié par le dispositif amplificateur de puissance respectif.

Selon un mode de réalisation de l'antenne de l'invention, les lignes à retard présentent chacune une longueur électrique différente des autres.

### Brève description des figures :

D'autres caractéristiques, détails et avantages de l'invention ressortiront à la lecture de la description faite en référence aux dessins annexés donnés à titre d'exemple et qui représentent, respectivement :
[Fig.1] une vue schématique d'un un formateur de faisceaux quasi-optiques de l'at antérieur
[Fig.2], des lois de phase et d'amplitude requises pour former les faisceaux dans plusieurs directions avec de faibles niveaux de lobes secondaires,
[Fig.3], un exemple de dépendance de la loi d'amplitude par rapport à la direction de pointage
[Fig.4], une vue schématique d'un formateur de faisceaux quasi-optique selon l'invention,
[Fig.5], une vue schématique d'un formateur de faisceaux quasi-optique selon un mode de réalisation de l'invention
[Fig.6A] et [Fig.6B] la trajectoire du faisceau radiofréquence de sortie se propageant avec un angle de 0° et de 54° respectivement dans un formateur de faisceaux selon un mode de réalisation de l'invention
[Fig.6C], un graphe représentant la distribution, sur la zone de prélèvement, de l'amplitude du champ normalisée des faisceaux 0° (courbe C1) et -54° (courbe C2) dans le formateur de faisceaux selon le mode de réalisation des figures 6A et 6B,
[Fig.7], le diagramme de rayonnement du formateur de faisceaux du mode de réalisation des figures 6A à 6C pour des faisceaux de sortie *RSᵢ* présentant un angle *θ* différent et pour trois fréquences centrales différentes générées par les sources PF: 17 GHz, 18GHz et 20 GHz.
[Fig.8], le diagramme de rayonnement du formateur de faisceaux selon un mode de réalisation de l'invention pour des faisceaux de sortie *RSᵢ* présentant un angle *θ* différent et pour trois fréquences centrales différentes générées par les sources PF: 17 GHz, 18GHz et 20 GHz.
[Fig.9], une vue schématique d'un agencement des sources d'alimentation dans un mode de réalisation de l'invention,
[Fig.10], une vue schématique d'un mode de réalisation de l'invention dans lequel le formateur de faisceau est réalisé à partir d'un circuit imprimé multicouches
[Fig.11], une vue schématique d'une antenne active selon l'invention comprenant au moins un formateur de faisceaux selon l'invention.

Dans les figures, sauf contre-indication, les éléments ne sont pas à l'échelle.

### Description détaillée :

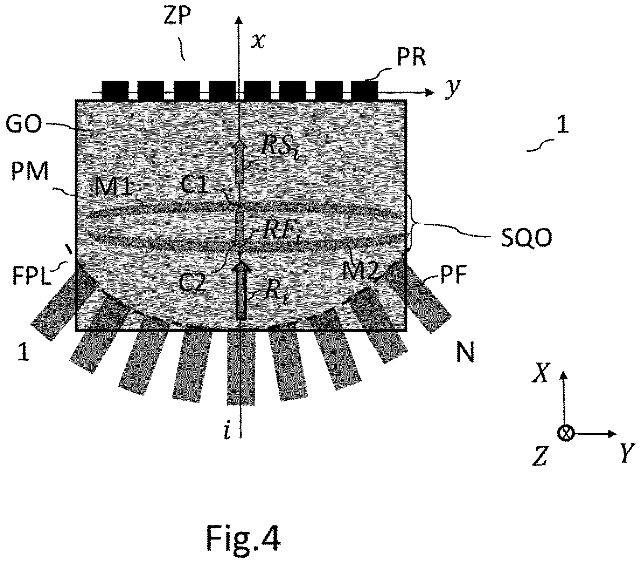

La figure 4 illustre schématiquement un formateur de faisceaux quasi-optique 1 selon l'invention qui comprend principalement une pluralité de N > 1 sources d'alimentation PF, un guide d'onde radiofréquence GO à plaques parallèles et une pluralité de port réseaux PR.

Dans le formateur de faisceaux quasi-optique 1 selon l'invention, chacune des i ∈ [1; N] sources d'alimentation PF est adaptée pour émettre un faisceau radiofréquence respectif noté Rᵢ. Selon un mode de réalisation de l'invention, chaque faisceau radiofréquence Rᵢ est généré par une pluralité de sources.

Selon un mode de réalisation de l'invention, les sources sont des cornets, par exemple des cornets en plan H, qui sont particulièrement adaptés pour effectuer la reconfiguration de faisceaux car chaque source d'alimentation défini un accès spot. De plus, les cornets peuvent être facilement conçus et fabriqués en technologie PCB (pour *Printed Circuit Board* en anglais).

Selon un autre mode de réalisation, les sources sont d'autres formes de sources bien connues de l'homme de l'art, par exemple des réseaux de monopoles, des transitions entre lignes micro-ruban et guides à plaques parallèles, transitions entre lignes tri-plaques et guides à plaques parallèles, etc.

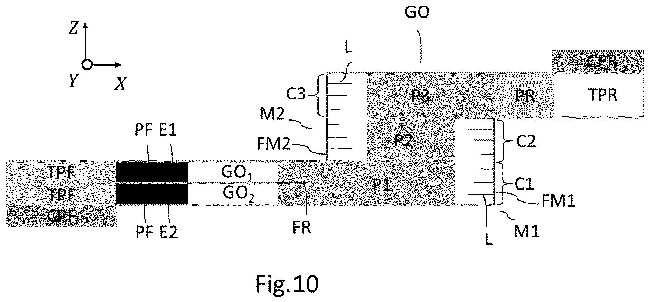

Le guide d'onde radiofréquence à plaques parallèles GOs'étend selon un axe principal central noté axe x et est alimenté en une première extrémité par les sources d'alimentation PF. Comme cela sera expliqué dans la description de la figure 10, de manière préférentielle, toute ou partie du guide d'onde radiofréquence à plaques parallèles GO est conçu et fabriqué en technologie PCB pour améliorer la compacité du formateur de faisceaux 1.

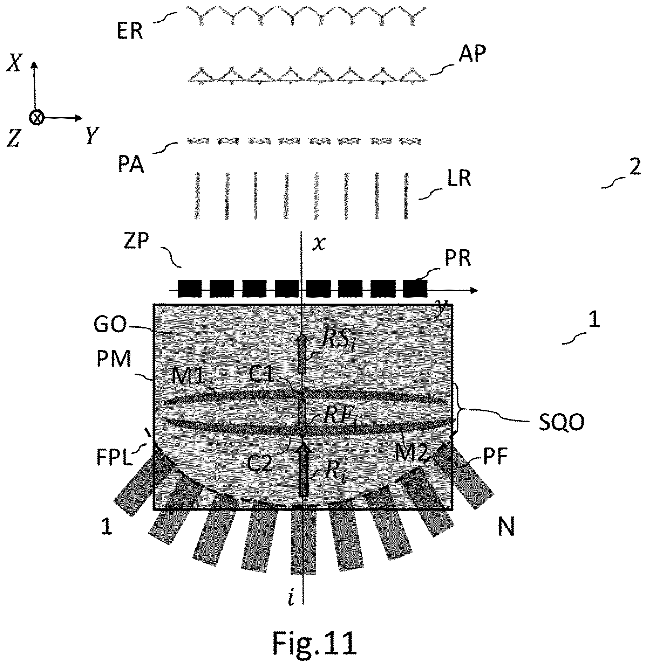

Les ports réseaux PR sont agencés en une deuxième extrémité du guide d'onde GO pour collecter un rayonnement radiofréquence et éventuellement permettre le couplage du formateur de faisceaux 1 à un panneau rayonnant afin de former une antenne active (voir figure 11).

Le guide d'onde GO comprend au moins deux plaques métalliques PM empilées pour guider les faisceaux radiofréquence Rᵢ, i ∈ [1; N] vers les ports réseaux PR. Par la suite, on appelle « zone de prélèvement ZP » la zone formée par la distribution spatiale des ports réseaux PR. A titre d'exemple non limitatif, dans la figure 4, cette zone de prélèvement est un segment de droite selon la direction *y* perpendiculaire à l'axe x et les plaques parallèles PM s'étendent selon le plan XY.

Les sources d'alimentation PF sont adaptées pour générer une onde TEM ou une onde TE ou bien les deux dans le guide d'onde GO.

Selon le mode de réalisation illustré dans la figure 4, les plaques métalliques PM s'étendent dans le plan XZ et sont donc superposés selon la direction Y. Comme cela sera illustré dans la figure 10 par exemple, le guide d'onde GO peut comprendre plusieurs paires de plaques, les paires étant empilées sur toute ou partie de leur étendue, de manière à formes des portions empilées de guide d'onde GO.

En outre, le formateur de faisceaux comprend un système quasi-optique SQO adapté pour collimater les faisceaux radiofréquence Rᵢ, i ∈ [1; N]. Pour cela, le système quasi-optique SQO comprend un premier réflecteur M1 et un deuxième réflecteur M2. Le premier réflecteur M1 présente un premier centre C1 centré sur l'axe x et un premier rayon de courbure effectif et est adapté pour réfléchir les faisceaux radiofréquences Rᵢ, i ∈ [1; N] guidés dans le guide d'onde à plaques parallèle GO. Le deuxième réflecteur M2 présente un deuxième rayon de courbure effectif et est adapté pour réfléchir les faisceaux radiofréquences réfléchis *RFᵢ*, i ∈ [1; N] par le premier réflecteur en le dirigeant vers les ports réseaux de manière à former des faisceaux radiofréquence de sortie *RSᵢ*, i ∈ [1; N].

Dans le formateur de faisceaux 1, les réflecteurs M1 et M2 (via notamment le premier et le deuxième rayons de courbure effectifs) et l'agencement des sources d'alimentation PF sont adaptés pour que :
- chacun des faisceaux radiofréquences de sortie *RSᵢ*, i ∈ [1; N] soit une onde plane, et
- pour que la distribution d'amplitude transverse Aᵢ de chaque faisceau radiofréquence de sortie *RSᵢ, i* ∈ [1; N] sur les ports réseaux PR soit sensiblement identique.

Par «distribution d'amplitude transverse Aᵢ sensiblement identique », on entend ici que l'excitation individuelle de chacune des sources PF conduit à des amplitudes des signaux reçus par chacun des ports réseaux PR de la zone de prélèvement ZP variant sur une dynamique inférieure ou égale à 3dB entre chacune de ces sources..

Le profil des réflecteurs M1 et M2 est optimisé par un logiciel de tracé de rayons et d'optique physique qui a été développé par les inventeurs. Dans cette optimisation, chaque réflecteur est défini par une *Spline,* elle-même définie par des « noeuds ». Par « Spline », on entend une fonction définie par morceaux par des polynômes. Pendant le processus itératif d'optimisation, ce sont ces «noeuds » qui sont déplacés et qui par voie de conséquence modifient le contour des réflecteurs. Le déplacement de ces « noeuds » est dicté par la différence de phase local entre la loi de phase souhaitée sur la zone de prélèvement et celle actuelle du système pendant le processus itératif.

D'autres paramètres entre en compte pour l'optimisation globale du système quasi-optique :
- la position des sources PF
- l'orientation des sources PF
- leur orientation autour de leurs centres de phase
- la largeur des sources.
- la largeur du système quasi-optique
- l'écartement entre les deux réflecteurs.

L'utilisation de deux réflecteurs M1, M2 particulièrement adaptés permet une grande compacité du formateur de faisceaux tout en assurant un fonctionnement optimisé sur une large plage angulaire. La compacité du dispositif de l'invention est rendue possible en plaçant les sources PF proche du centre C1 via l'utilisation d'un système quasi-optique SQO comprenant aux moins deux réflecteurs. En effet, l'utilisation de deux (ou plus) réflecteurs permet de réduire la distance entre le plan focal FPL et le premier centre C1 par rapport à l'utilisation d'un seul réflecteur de même centre C1.

De plus, au premier ordre, les réflecteurs du système optique SQO sont adaptés pour qu'un angle entre l'axe x et la direction de propagation des faisceaux RSᵢ de sortie soit égal à un angle entre le centre focal des sources PF et le premier centre C1. Aussi, il est possible de contrôler la couverture angulaire du formateur de faisceaux 1 via la disposition des sources PF.

Selon un mode de réalisation préféré, la direction de propagation des faisceaux radiofréquences en sortie de chaque source PF et le premier et le deuxième rayons de courbure effectifs sont configurés pour que le formateur de faisceaux 1 possède une couverture angulaire supérieure à 45°, préférentiellement 55°. Par « couverture angulaire de *θ*°», on entend ici que le formateur de faisceaux 1 est adapté pour émettre des faisceaux de sortie *RSᵢ* se propageant avec un angle allant de + *θ*° à - *θ*° par rapport à l'axe x. L'utilisation d'une couverture angulaire supérieure à 50° par exemple est souhaitable dans de nombreuses applications, notamment pour les satellites en orbite LEO.

De manière préférentielle, comme illustré dans la figure 4, le centre focal de chaque source d'alimentation PF est agencé dans le plan focal FPL du système quasi-optique SQO afin de garantir une collimation optimale par le système SQO.

De manière préférentielle, les réflecteurs et l'agencement des sources d'alimentation PF sont adaptés pour que la distribution transverse d'amplitude d'un faisceau de sortie *RSᵢ* sur la zone de prélèvement ZP suive une loi apodisée, ce qui permet un élargissement du lobe principal de ce faisceau et une réduction les lobes secondaires associés à ce faisceau.

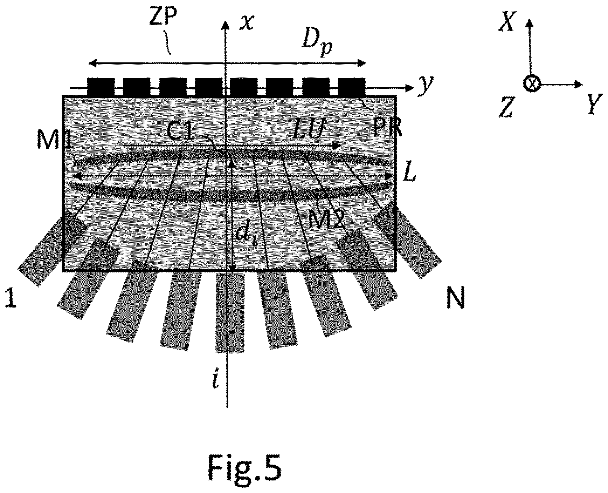

La figure 5 illustre schématiquement un mode de réalisation préféré de l'invention dans lequel, afin de faciliter l'optimisation du profil des réflecteurs, les sources d'alimentation PF sont agencées afin que chacun des faisceaux Rᵢ, i ∈ [1; N] illumine partiellement les réflecteurs sur une zone différente de celle des autres faisceaux. Cela permet d'augmenter les degrés de liberté lors de la conception des réflecteurs pour l'optimisation des paramètres des différentes directions angulaires. Il est alors possible d'obtenir un meilleur contrôle du niveau lobes secondaires sur un large secteur angulaire out en s'assurant que la condition sur la distribution d'amplitude sur la zone de prélèvement soit respectée. Dans la figure 5, on a représenté uniquement l'axe de propagation central des faisceaux *Rᵢ* . Il est entendu qu'en réalité, il peut exister un chevauchement partiel entre certaines des zones des réflecteurs illuminées par les faisceaux Rᵢ, i ∈ [1; N].

La référence LU dans la figure 5 correspond à la dimension maximale de la région formée par la somme des zones du réflecteur M1 illuminées par les faisceaux Rᵢ, i ∈ [1; N] . Cette dimension maximale est appelée par la suite dimension utile LU. Selon un mode de réalisation, afin d'assurer une compacité satisfaisante tout en conservant un fonctionnement optimal du système quasi-optique SQO, dans le formateur de faisceaux 1 la distance *dᵢ* entre un centre focal de chaque *i* ∈ [1,;*N*] source d'alimentation PF et le premier centre *C*₁ est inférieure à une dimension utile *LU* du premier réflecteur divisée par deux.

Selon le mode de réalisation illustré en figure 4 et en figure 5, le système quasi-optique SQO comprend uniquement deux réflecteurs M1, M2. Ceci permet d'obtenir une couverture angulaire satisfaisante tout en conservant une compacité intéressante.

Alternativement, selon un autre mode de réalisation, le système quasi-optique SQO comprend un nombre de réflecteurs supérieur à deux, les réflecteurs étant agencés de manière à réfléchir successivement les faisceaux radiofréquence Rᵢ, i ∈ [1; N] et les collimater. Par rapport à uniquement deux réflecteurs, l'utilisation d'un nombre de réflecteurs supérieur à deux permet d'accroitre la couverture angulaire du formateur de faisceaux 1. De plus cela, permet d'augmenter les degrés de liberté d'optimisation du rayon de courbure effectif de chaque réflecteur assurant ainsi des distributions d'amplitude transverse Aᵢ sur les ports réseaux égales pour tout *i* ∈ [1; N]. Il est entendu que cela complexifie la conception et la fabrication du formateur de faisceaux 1.

De manière préférentielle, par l'agencement des sources PF par rapport aux réflecteurs et l'optimisation des réflecteurs, les aberrations de phase dans les faisceaux de sorties *RSᵢ* sont inférieures à *λ*/10, préférentiellement inférieures à *λ*/8. Ici, *λ* est la longueur d'onde centrale pour laquelle est optimisé le formateur de faisceaux 1. Une aberration de phase inférieure à *λ*/10 est souhaitable pour réduire les erreurs de dépointage et le niveau des lobes secondaires.

De manière préférentielle, le premier et le deuxième réflecteurs sont adaptés pour que la distribution d'amplitude transverse Aᵢ de chaque faisceau radiofréquence de sortie *RSᵢ* i ∈ [1; N] présente une variation maximale d'amplitude sur la zone de prélèvement égale à 6 dB à ±1*dB.* Une variation de 6dB permet de rejeter les lobes secondaires à un valeur satisfaisante (17dB ou moins de l'amplitude maximale) sans sur-dimensionner l'antenne active comprenant le formateur de faisceau de l'invention. En effet, en supposant que la distribution d'amplitude transverse Aᵢ est adaptée, une variation supérieure à 6dB permettrait de réduire d'avantage les lobes secondaires mais aurait pour conséquence de devoir agrandir la taille de l'antenne à gain d'antenne donnée

Selon un mode de réalisation préféré de l'invention, la zone de prélèvement ZP formée par les ports réseaux PR présente une dimension transversale *Dₚ* inférieure à une dimension maximale des réflecteurs. Dans le mode de réalisation de la figure 5, les ports réseaux PR sont alignés selon la direction *y* avec une longueur d'alignement *Dₚ* et les réflecteurs M1, M2 présentent une longueur (dimension maximale) de dimension *L > Dₚ.* Cette possibilité de pouvoir sous-dimensionner la zone de prélèvement est particulièrement intéressante pour des applications d'antenne active afin d'éviter un surdimensionnement des éléments rayonnant et donc du gain d'antenne. Dans l'invention, il est possible de sous-dimensionner la zone de prélèvement sans dégrader aucunement le fonctionnement du formateur de faisceaux sur l'ensemble de la couverture angulaire.

A titre d'exemple non limitatif, selon un mode de réalisation, les réflecteurs M1, M2 présentent une longueur de dimension *L* = 21*λ* et le formateur de faisceaux 1 comprend 26 ports réseaux PR alignés côté à côté selon la direction *y*, chaque port réseau PR présentant une largeur de 0.6 *λ*. Ainsi, l'alignement formé par les ports réseaux présente une longueur d'alignement *Dₚ* = 16 *λ*. Des ports réseaux présentant une largeur de 0.6 *λ* ou inférieure à 0.6 *λ* sont préférés afin de réduire les réflexions parasites à fortes incidence.

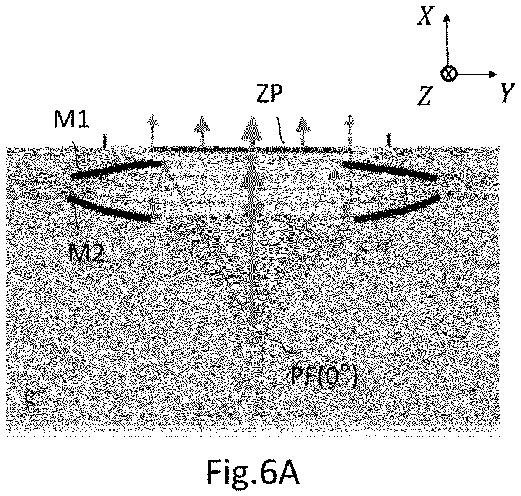

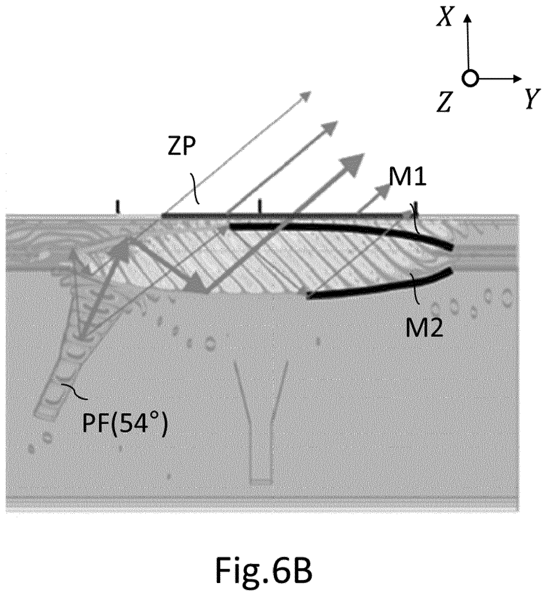

Les figures 6A et 6B illustrent schématiquement la trajectoire du faisceau radiofréquence de sortie se propageant avec un angle de 0° (« faisceau 0° » ci après) et de 54° (« faisceau 54° » ci après) respectivement dans un formateur de faisceaux 1 selon un mode de réalisation de l'invention comprenant uniquement un premier et un deuxième réflecteur M1, M2. A titre d'exemple non limitatif, les ports réseaux PR sont alignés dans la zone de prélèvement ZP, côté à côté, selon la direction *y*. Sur les figures 6A et 6B, on observe que le faisceau 0° n'illumine pas la même zone des réflecteurs M1, M2, ni la même région que la zone de prélèvement ZP que celles illuminées par le faisceau 54°. Comme expliqué précédemment, cela permet d'optimiser séparément et plus facilement les paramètres des faisceaux 0° et 54° (par exemple réduction des lobes secondaires ou distribution d'amplitude sur la zone de prélèvement).

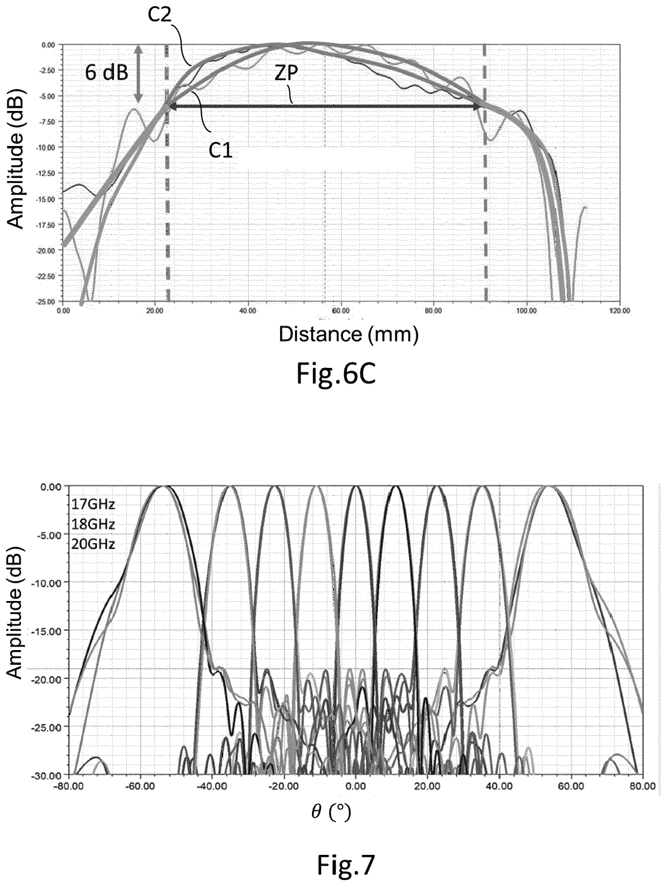

La figure 6C est un graphe représentant la distribution, sur la zone de prélèvement, de l'amplitude du champ normalisée des faisceaux 0° (courbe C1) et -54° (courbe C2) dans le formateur de faisceaux 1 selon le mode de réalisation des figures 6A et 6B. Compte tenu de la géométrie des figures 6A et 6B, cette distribution d'amplitude correspond à un profil selon la direction Y sur la zone de prélèvement ZP. On observe sur la figure 6C que la distribution d'amplitude des faisceaux 0° et -54° est sensiblement identique sur la zone de prélèvement ZP, les faisceaux 0° et -54° illuminant parfaitement les ports réseaux, avec une loi apodisée, ce qui permet un élargissement du lobe principal de chaque faisceau et une réduction des lobes secondaires associés à ces faisceaux. De plus, on remarque que les deux faisceaux de sorties présentent chacun une variation maximale d'amplitude sur la zone de prélèvement égale à 6 dB.

La figure 7 illustre le diagramme de rayonnement du formateur de faisceaux 1 du mode de réalisation des figures 6A à 6C pour des faisceaux de sortie *RSᵢ* présentant un angle *θ* par rapport à l'axe *X* de ±55°, ±35°, ±22,5°, ±10° et 0° (et chacun associé à une source PF respective) et pour trois fréquences centrales différentes générées par les sources PF: 17 GHz, 18GHz et 20 GHz.

Tout d'abord, on observe que les niveaux des lobes secondaires est bas (environ -20 dB par rapport au gain maximum) et cela pour les trois fréquences centrales. Cependant, on remarque que le formateur de faisceaux 1 produit des faisceaux de sorties *RSᵢ* qui se recoupent à un niveau de gain faible (environ -15 dB par rapport au gain maximum).

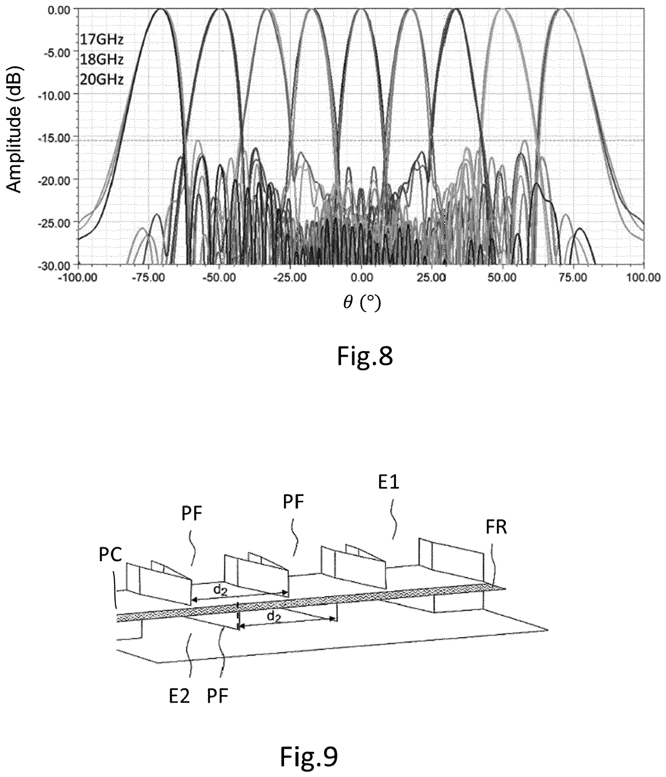

La figure 8 illustre le diagramme de rayonnement du formateur de faisceaux 1 selon un mode de réalisation à deux réflecteurs différent de celui des figures 6A à 7. De part une optimisation du profil des réflecteurs M1, M2 différente de celle des réflecteurs des figures 6A à 7, le formateur de faisceaux de la figure 8 présente une couverture angulaire de ±70°. Le diagramme de rayonnement est fourni pour les trois mêmes fréquences centrales que celles de la figure 7 et pour des faisceaux présentant un angle *θ* par rapport à l'axe *X* de ±70°, ±50°, ±32,5°, ±17.5° et 0°. De même que dans la figure 7, dans la figure 8 on observe les niveaux des lobes secondaires est bas (environ -16 dB par rapport au gain maximum) et cela pour les trois fréquences centrales. Tout comme dans la figure 7, on remarque que le formateur de faisceaux 1 produit des faisceaux de sorties *RSᵢ* qui se recoupent à un niveau de gain faible (environ -15 dB par rapport au gain maximum).

Comme illustré dans les figures 7 et 8, le formateur de faisceaux 1 produit des faisceaux de sorties *RSᵢ* qui se recoupent à un niveau de gain faible. Ce niveau de recoupement des faisceaux provient d'un compromis sur la taille des sources : d'une part, elles doivent être suffisamment larges pour illuminer correctement le système quasi-optique SQO, et ainsi éviter des pertes par débordement, et d'autre part, elles doivent être suffisamment proches pour que les faisceaux de sortie *RSᵢ* se recouvrent.

Pour pallier ce problème, selon un mode de réalisation illustré en figure 9, les sources d'alimentation PF sont superposées sur au moins deux étages E1 et E2, chacun des au moins deux étages étant séparés par un plan conducteur PC commun à deux étages adjacents, le formateur de faisceaux quasi-optique comprenant un film résistif FR disposé dans la continuité du plan conducteur. Comme illustré dans la figure 9, les sources PF de l'étage E1 supérieurs et les sources PF de l'étage E2 peuvent être décalées l'une par rapport à l'autre selon le plan focal FPL du système quasi-optique SQO. A titre d'exemple non limitatif, dans l'illustration de la figure 9, les sources PF de l'étage E1 et les sources PF de l'étage E2 sont décalées d'une distance *d*₂/2 (avec *d*₂ la largeur d'une source PF), et le centre focal d'une source de l'étage supérieur E1 coïncide avec la jonction entre deux sources de l'étage inférieur E2, et réciproquement.

La présence du film résistif dans la continuité du plan conducteur permet de minimiser les pertes liées au recoupement des faisceaux tout en augmentant la densité de sources PF. Cela permet donc d'augmenter la résolution angulaire des faisceaux *Rᵢ* et donc permet d'éviter l'obtention d'un formateur de faisceaux générant des faisceaux séparés angulairement et se recoupant à des niveaux très bas. Le film résistif permet entre autre l'utilisation de sources PF de plus grandes tailles, ce qui permet également de limiter l'amplitude du champ sur les bords du formateur de faisceaux 1 et donc de limiter les réflexions parasites sur ces bords.

Le film résistif FR permet d'isoler les sources de l'étage inférieur E1 des sources de l'étage E2, et d'obtenir, au niveau du port de sortie commun aux deux étages et situé dans le guide d'ondes GO, la sommation sans pertes des signaux provenant des ports faisceaux d'entrées lorsqu'ils sont en phase et de même amplitude.

La figure 10 illustre un mode de réalisation de l'invention dans lequel le formateur de faisceau est réalisé à partir d'un circuit imprimé multicouches. Ce mode de réalisation présente l'avantage d'avoir une compacité grandement améliorée. Le circuit imprimé multicouches comprend au moins trois couches empilées Cl1, Cl2, Cl3 selon la direction *Z*. Les trois couches empilées étant métallisées ou partiellement métallisées de manière à former le guide d'onde radiofréquence GO à plaques parallèles. Plus précisément, le guide d'onde comprend une première, une deuxième et une troisième portions P1, P2 et P3 empilées selon la direction *Z* et agencées pour que la direction principale du guide d'onde GO soit selon l'axe x.

Dans le mode de réalisation de la figure 10, le premier réflecteur est disposé de manière à réfléchir les faisceaux radiofréquences Rᵢ guidés dans la première portion P1 vers la deuxième portion P2. De plus, le deuxième réflecteur est disposé de manière à réfléchir les faisceaux radiofréquences Rᵢ guidés dans la deuxième portion vers la troisième portion.

Le circuit imprimé multicouches de la figure 10 comprend en outre des transitions TPF adaptées pour relier les sources PF aux connecteurs de sources CPF et des transitions TPR adaptées pour relier les ports réseaux aux connecteurs de ports réseaux CPR

De manière optionnelle, comme illustré en figure 10, les sources PF sont superposées sur au moins deux étages E1 et E2. De plus, le circuit imprimé multicouches comprend deux guide d'ondes à plaques parallèles GO1, GO2 superposés selon la direction *Z*, chacun des guide d'ondes à plaques parallèles superposé GO1, GO2 étant disposé face aux sources PF d'un étage respectif afin de guider le rayonnement émis par ces sources. Le guide d'onde GO est alors disposé dans la continuité des guides d'ondes à plaques parallèles superposés GO1, GO2. Enfin, le film résistif FR est disposé à la jonction entre chaque guide d'ondes à plaques parallèles superposé et le guide d'ondes GO afin de minimiser les pertes liées au recoupement des faisceaux tout en augmentant la densité de sources PF.

Dans le mode de réalisation de la figure 10, les réflecteurs M1, M2 comprennent chacun des lamelles métalliques L déposées sur une face métallisée du circuit multicouches (référencées FM1 et FM2 respectivement dans la figure 10). Dans ce mode de réalisation, la hauteur de chaque lamelle et son agencement sur sa face métallisée respective sont adaptées présente respectivement le premier et le deuxième rayon de courbure effectif. La position et la hauteur de chaque lamelle est préférentiellement déterminée par logiciel.

Alternativement, selon une variante du mode de réalisation de la figure 10, les réflecteurs M1, M2 sont réalisés avec des transitions sans contact entre plusieurs couches du guide d'onde radiofréquence. La création de réflecteur avec des transitions sans contact dans un circuit multicouches est décrite dans le document FR 3 057 999.

La figure 11 illustre schématiquement une antenne active 2 selon l'invention. L'antenne 2 comprend au moins un formateur de faisceaux selon l'invention et des lignes à retard LR. Chacune des lignes à retard LR est connectée à un des ports réseaux respectif en une extrémité proximale et en un dispositif amplificateur de puissance AP en une extrémité distale par l'intermédiaire d'un port amplificateur PA. Le dispositif amplificateur de puissance AP est adapté pour amplifier un signal radiofréquence collecté par le port faisceau respectif. Enfin, des éléments rayonnants ER sont chacun relié à un dispositif amplificateur de puissance respectif et sont adapté pour émettre une onde radiofréquence à partir du signal radiofréquence amplifié par le dispositif amplificateur de puissance respectif.

Comme expliqué précédemment, la dimension transverse de la zone de prélèvement impacte directement le nombre d'éléments rayonnants pouvant être alimentés par le formateur de faisceaux 1. Ce nombre d'éléments rayonnants est typiquement égal à la largeur en *λ* de la zone de prélèvement divisé par environ 0.6 (les ports réseaux étant séparés d'environ 0.6*λ* pour minimiser les réflexions parasites aux bords du formateurs de faisceaux 1).

Il est ainsi important de contrôler la dimension transverse de cette zone de prélèvement pour qu'elle soit en adéquation avec le nombre d'éléments rayonnants de l'antenne. Une zone de prélèvement trop grande par rapport au nombre d'éléments rayonnants souhaité conduirait à sous utiliser l'énergie en sortie du formateurs de faisceaux et à générer ainsi des pertes supplémentaires.

Selon un mode de réalisation de l'antenne active 2 de l'invention, les lignes à retard présentent chacune une longueur électrique différente des autres. Ainsi, les lignes à retard introduisent un degré de liberté supplémentaire lors de l'optimisation des réflecteurs afin d'obtenir une phase prédéterminée en sortie d'antenne active.

Bien que le fonctionnement des dispositifs de l'invention ait été décrit en émission, le fonctionnement se transpose également en réception. Dans ce cas, une onde incidente radiofréquence parallèle est collectée puis transmise vers les ports réseaux et est focalisée par le système quasi-optique SQO selon une direction déterminée par l'angle de propagation de l'onde incidente respectivement à l'axe *x*. Enfin, chacune des sources d'alimentation PF est également adaptée pour collecter le rayonnement focalisé le système quasi-optique SQO selon une direction respective.

## Revendications

1. Formateur de faisceaux quasi-optique (1) comprenant :
- une pluralité de N > 1 sources d'alimentation (PF), chacune des i ∈ [1; N] sources d'alimentation (PF) étant adaptée pour émettre un faisceau radiofréquence respectif noté Rᵢ
- un guide d'onde radiofréquence (GO) à plaques parallèles s'étendant selon un axe principal central noté axe x et étant alimenté en une première extrémité par les sources d'alimentation, une pluralité de port réseaux (PR) étant agencés en une deuxième extrémité du guide d'onde radiofréquence (GO)) pour collecter un rayonnement radiofréquence, le guide d'onde radiofréquence (GO) comprenant au moins deux plaques métalliques (PM) empilées pour guider les faisceaux radiofréquence Rᵢ, i ∈ [1; N] vers les ports réseaux (PR),
- un système quasi-optique (SQO) présentant un plan focal (FPL) et comprenant un premier réflecteur (M1) présentant un premier centre (C1) centré sur l'axe x et un premier rayon de courbure effectif et étant adapté pour réfléchir les faisceaux radiofréquences Rᵢ, i ∈ [1; N] guidés, et comprenant un deuxième réflecteur (M2) présentant un deuxième rayon de courbure effectif et étant adapté pour réfléchir les faisceaux radiofréquences réfléchis (*RFᵢ*) par le premier réflecteur en le dirigeant vers les ports réseaux de manière à former des faisceaux radiofréquence de sortie (*RSᵢ*)
le premier et le deuxième rayons de courbure effectifs et un agencement des sources d'alimentation (PF) étant adaptés pour que chacun des faisceaux radiofréquences de sortie (*RSᵢ*) soit une onde plane, et pour qu'une distribution d'amplitude transverse Aᵢ sur les ports réseaux (PR) de chaque faisceau radiofréquence de sortie (*RSᵢ*), soit sensiblement identique.

2. Formateur de faisceaux quasi-optique selon la revendication 1, dans lequel une distance entre un centre focal de chaque source d'alimentation (PF) et le premier centre est inférieure à une dimension utile (*LU*) du premier réflecteur divisée par deux.

3. Formateur de faisceaux quasi-optique selon l'une quelconques des revendications précédentes, dans lequel une direction de propagation des faisceaux radiofréquences Rᵢ, i ∈ [1; N] et le premier et le deuxième rayons de courbure effectifs sont configurés pour qu'au moins un des faisceaux radiofréquence (RSᵢ) de sortie se propage avec un angle supérieur à 45°, préférentiellement 55° par rapport à l'axe x.

4. Formateur de faisceaux quasi-optique selon l'une quelconque des revendications précédentes, dans lequel les sources d'alimentation (PF) sont agencées de sorte à ce que chacun des faisceaux radiofréquences Rᵢ, i ∈ [1; N] illumine partiellement le premier et le second réflecteurs sur une zone différente de celle des autres faisceaux radiofréquences.

5. Formateur de faisceaux quasi-optique selon l'une quelconque des revendications précédentes, une dimension transverse (*Dₚ*) d'une zone formée par l'ensemble des ports réseaux, appelée zone de prélèvement, est inférieure à une dimension maximale du premier et du deuxième réflecteur.

6. Formateur de faisceaux quasi-optique selon l'une quelconque des revendications précédentes, dans lequel les sources d'alimentation sont superposées sur au moins deux étages, chacun des au moins deux étages étant séparés par un plan conducteur commun à deux étages adjacents, le formateur de faisceaux quasi-optique comprenant un film résistif disposé dans la continuité du plan conducteur.

7. Formateur de faisceaux quasi-optique selon l'une quelconque des revendications précédentes, dans lequel un centre focal de chaque source d'alimentation (PF) est agencé dans le plan focal du système quasi-optique (SQO).

8. Formateur de faisceaux quasi-optique selon l'une quelconque des revendications précédentes réalisé à partir d'un circuit imprimé multicouches.

9. Formateur de faisceaux quasi-optique selon la revendication précédente, dans lequel le circuit imprimé multicouches comprend au moins trois couches empilées (Cl1, Cl2, Cl3), les trois couches empilées étant métallisées ou partiellement métallisées de manière former le guide d'onde radiofréquence, le guide d'onde comprenant une première, une deuxième et une troisième portions (p1, P2, P3) empilées, le premier réflecteur étant disposé de manière à réfléchir les faisceaux radiofréquences Rᵢ, i ∈ [1; N] guidés dans la première portion vers la deuxième portion et le deuxième réflecteur étant disposé de manière à réfléchir les faisceaux radiofréquences Rᵢ, i ∈ [1; N] guidés dans la deuxième portion vers la troisième portion.

10. Formateur de faisceaux quasi-optique selon la revendication 8 ou 9, dans lequel le premier et le deuxième réflecteurs comprennent chacun des lamelles (L) métalliques déposées sur une face métallisée (FM1, FM2) du circuit multicouches, une hauteur et un agencement des lamelles étant adaptée pour que premier et le deuxième réflecteur présente respectivement le premier et le deuxième rayon de courbure effectif.

11. Formateur de faisceaux quasi-optique selon la revendication 8 ou 9, dans lequel les réflecteurs sont réalisés avec des transitions sans contact entre plusieurs couches du guide d'onde radiofréquence.

12. Formateur de faisceaux quasi-optique selon l'une quelconque des revendications précédentes, comprenant un nombre de réflecteurs supérieur à deux, les réflecteurs étant agencés de manière à réfléchir successivement les faisceaux radiofréquence Rᵢ, i ∈ [1; N] et les collimater.

13. Antenne active plane (2) comprenant :
- au moins un formateur de faisceaux (1) selon l'une des revendications précédentes
- des lignes à retard (LR), chacune connectée à un des ports réseaux respectif en une extrémité proximale et en un dispositif amplificateur de puissance (AP) en une extrémité distale, le dispositif amplificateur de puissance étant adapté pour amplifier un signal radiofréquence collecté par le port faisceau respectif
- des éléments rayonnants (ER) chacun relié à un dispositif amplificateur de puissance respectif et adapté pour émettre une onde radiofréquence à partir du signal radiofréquence amplifié par le dispositif amplificateur de puissance respectif.

14. Antenne active plane selon la revendication précédente, dans laquelle les lignes à retard présentent chacune une longueur électrique différente des autres.
